# EUROPÄISCHE PATENTANMELDUNG

(11) **EP 4 787 127 A1**
(43) Veröffentlichungstag der Anmeldung: **05.08.2026**
(21) Anmeldenummer: 25223728.4
(22) Anmeldetag: 16.12.2025
(51) Int. Cl.: G06F 3/01, A47J 37/01, A47L 15/00, G05B 19/00, G06F 3/16, H05B 6/12

(54) **VERFAHREN UND SYSTEM ZUM BEDIENEN EINES HAUSHALTSGERÄTES**

(30) Priorität: 30.01.2025 LU 103526
(71) Anmelder: Miele & Cie. KG, 33332 Gütersloh (DE)
(72) Erfinder: Strothmann, Jörn, 33829 Borgholzhausen (DE)

(57) **Zusammenfassung**

Die Erfindung betrifft ein Verfahren zum Bedienen eines Haushaltsgerätes (102), das Verfahren umfassend die Schritte: Bereitstellen einer einen optischen Sensor (106) aufweisenden, intelligenten Brille (104) und mindestens eines Haushaltsgerätes (102), wobei die intelligente Brille (104) und das mindestens eine Haushaltsgerät (102) über eine Netzwerkverbindung (110) verbindbar sind; Erfassen von Bilddaten von dem mindestens einen Haushaltsgerät (102) durch den optischen Sensor (106) der intelligenten Brille (104); und Bedienen des mindestens einen Haushaltsgerätes (102) über die Netzwerkverbindung (110) unter Verwendung der erfassten Bilddaten. Ferner betrifft die Erfindung ein System (100) zum Bedienen eines Haushaltsgerätes (102).

## Beschreibung

Die Erfindung betrifft ein Verfahren zum Bedienen eines Haushaltsgerätes und ein System zum Bedienen eines Haushaltsgerätes.

In der modernen Küchen- und Hausgerätekonstruktion gewinnen innovative Steuerungsverfahren zunehmend an Bedeutung, insbesondere bei der Automatisierung und Optimierung von Haushaltsaufgaben, wie Kochen, Waschen, Backen und/oder Trocknen.

Im Bereich der tragbaren Elektronik sind Smartglasses ein wachsender Markt, der zunehmend durch die Integration fortschrittlicher Sensorik und Vernetzung geprägt wird. Bereits heute existieren verschiedene Modelle, die sich durch ihre Funktionalität und Kompaktheit auszeichnen. Beispielsweise ermöglichen leichte und unauffällige Brillen wie die "RayBan Meta X" oder "Solos AirGo Vision" eine nahtlose Verbindung zum Internet und verfügen über Kameras, Mikrofone sowie Sensoren wie Beschleunigungsmesser und Time-of-Flight-Sensoren (TOF). Hochentwickelte Geräte wie die "Apple Vision Pro" bieten zusätzlich Funktionen wie Eyetracking und präzise räumliche Überblendungen, die neue Möglichkeiten für Anwendungen in der Mixed Reality eröffnen.

Der aktuelle Stand der Technik umfasst Anwendungen, die Smartglasses nutzen, um Benutzern kontextbezogene Informationen bereitzustellen. So ermöglichen Applikationen für Modelle wie die "RayBan Meta X" und im Rahmen von Projekten wie "Google Gemini" beispielsweise die akustische Ausgabe von Informationen zu Objekten, die von der Brillenkamera erfasst werden. Diese Entwicklungen zeigen das Potenzial vernetzter Brillen auf, durch KI-gestützte Verarbeitung der Sensordaten und Interaktionen mit externen Plattformen einen Mehrwert zu schaffen.

Darüber hinaus gibt es im Bereich der Internet-of-Things (IoT)-Anwendungen bereits Lösungen, bei denen Geräte über externe Fernbedienungen oder Apps gesteuert werden. Die Anzeige solcher Bedienoberflächen auf Mixed-Reality-Brillen wie der "Apple Vision Pro" oder der "XREAL" ist ebenfalls bekannt. Allerdings beschränkt sich die Steuerung in der Regel auf traditionelle Bedienkonzepte, etwa durch Auswahl von Schaltflächen auf dem Display des Mobilgeräts oder der Brille. Das Zusammenspiel zwischen den Sensoriken und Bedienoberflächen der Brille und der externen Einheit wird dabei nicht genutzt, sodass Potenziale für eine effizientere und intuitivere Steuerung ungenutzt bleiben.

Es ist eine Aufgabe der Erfindung, ein im Lichte des Standes der Technik verbessertes Verfahren und System zum Bedienen eines Haushaltsgerätes anzugeben.

Erfindungsgemäß wird diese Aufgabe durch ein Verfahren zum Bedienen eines Haushaltsgerätes mit den Merkmalen des Patentanspruchs 1 gelöst. Erfindungsgemäß wird diese Aufgabe ferner durch ein System zum Bedienen eines Haushaltsgerätes mit den Merkmalen des Patentanspruchs 15 gelöst. Vorteilhafte Ausgestaltungen und Weiterbildungen der Erfindung ergeben sich aus den nachfolgenden Unteransprüchen.

Vorliegend wird ein Verfahren zum Bedienen eines Haushaltsgerätes beansprucht. Das Verfahren umfasst die Schritte: Bereitstellen einer einen optischen Sensor aufweisenden, intelligenten Brille und mindestens eines Haushaltsgerätes, wobei die intelligente Brille und das mindestens eine Haushaltsgerät über eine Netzwerkverbindung verbindbar sind; Erfassen von Bilddaten von dem mindestens einen Haushaltsgerät durch den optischen Sensor der intelligenten Brille; und Bedienen des mindestens einen Haushaltsgerätes über die Netzwerkverbindung unter Verwendung der erfassten Bilddaten.

Ebenfalls wird die Verwendung einer intelligenten Brille für ein solches Verfahren bzw. in einem solchen Verfahren beansprucht.

Ferner wird ein System zum Bedienen eines Haushaltsgerätes beansprucht. Das System umfasst eine einen optischen Sensor aufweisende, intelligente Brille, mindestens ein Haushaltsgerät und mindestens eine Recheneinrichtung, wobei die intelligente Brille, das mindestens eine Haushaltsgerät und die Recheneinrichtung über eine Netzwerkverbindung verbindbar sind; wobei der optische Sensor der intelligenten Brille zum Erfassen von Bilddaten von dem mindestens einen Haushaltsgerät ausgebildet ist, und wobei die Recheneinrichtung unter Verwendung der erfassten Bilddaten zum Erzeugen eines Bediensignals zum Bedienen des mindestens einen Haushaltsgerätes, insbesondere über die Netzwerkverbindung, ausgebildet ist.

Ein Haushaltsgerät bezeichnet vorzugsweise ein elektrisch oder mechanisch betriebenes Gerät, das für spezifische Aufgaben im Haushalt wie Kochen oder Reinigen verwendet wird. Ein solches Haushaltsgerät kann als Einbauhaushaltsgerät fest in einem Haushalt verbaut oder mobil in einem Haushalt vorhanden sein. Beispiele für solche Haushaltsgeräte sind Gargeräte, wie Backöfen, Herde, Kochfelder, Mikrowellen, Dampfgarer, Reinigungsgeräte, wie Waschmaschinen, Spülmaschinen, Wäschetrockner, Staubsauger, Nasssauger, und/oder sonstige für Haushaltsaufgaben eingesetzte Geräte.

Ein optischer Sensor ist vorzugsweise ein Bauteil, das elektromagnetische Strahlung, insbesondere Licht im sichtbaren oder nicht sichtbaren Spektralbereich, erfasst und in elektrische Signale umwandelt, um Informationen über Bewegungen, Entfernungen oder Umgebungsmerkmale bereitzustellen. Beispielhaft kann der optische Sensor eine Kamera aufweisen.

Eine intelligente Brille ist vorzugsweise eine tragbare Vorrichtung in Form einer Brille, die mit elektronischen Komponenten wie Kameras, Displays und Sensoren ausgestattet ist, um interaktive Funktionen wie Augmented Reality oder Gestenerkennung bereitzustellen.

Eine Recheneinrichtung bezeichnet vorzugsweise eine hardware- oder softwarebasierte Komponente oder ein Modul, das Daten verarbeitet, analysiert und/oder speichert, wie beispielsweise Mikroprozessoren, integrierte Schaltkreise und/oder eigenständige Computersysteme.

Eine Netzwerkverbindung ist vorzugsweise eine drahtlose Kommunikationsschnittstelle, die es ermöglicht, Daten über Protokolle wie WLAN, Bluetooth und/oder Mobilfunk auszutauschen.

Bilddaten umfassen vorzugsweise digitale Informationen, die durch optische Geräte wie Kameras oder Scanner erfasst werden und visuelle Inhalte in Form von Pixelwerten oder Vektorgrafiken darstellen.

Die vorliegende Erfindung zielt darauf ab, eine leistungsfähige und intuitive Erfassung von Benutzerabsichten und Benutzergesten zu ermöglichen, ohne dass umfangreiche zusätzliche Sensorik im Haushaltsgerät selbst erforderlich ist. Durch die intelligente Kombination der Sensorik einer intelligenten Brille (Smartglas) und externen Haushaltsgeräten ist eine innovative Steuerungslösung geschaffen, die bestehende Ansätze erweitert und den Nutzwert von Smartglasses in loT-Anwendungen und darüber hinaus steigert. Das vorgeschlagene Konzept ermöglicht dabei eine Erkennung von Gesten eines Nutzers, da der Nutzer seine Hände mittels der intelligenten Brille aus einer optisch günstigen Perspektive filmen kann. Ferner ist nur wenig oder keine zusätzliche Sensorik, wie z.B. eine Kamera, im Haushaltsgerät selbst erforderlich. Bei Systemen, die über eine Time-of-Flight-Sensorik zur Gestenerkennung verfügen, können zudem Gesten des Nutzers über die zweite Perspektive exakter erkannt und/oder hinsichtlich ihrer Validität abgesichert werden.

In einem weiteren Aspekt wird vorgeschlagen, dass das Verfahren ferner ein, insbesondere eindeutiges, Identifizieren des mindestens einen zu bedienenden Haushaltsgerätes in den Bilddaten unter Verwendung einer gerätespezifischen Kennung umfasst.

Das Identifizieren des mindestens einen zu bedienenden Haushaltsgerätes bezeichnet vorzugsweise den Prozess, bei dem ein spezifisches Haushaltsgerät innerhalb der aufgenommenen Bilddaten erkannt wird, um es für die weitere Interaktion oder Steuerung eindeutig zu bestimmen. Die Bilddaten umfassen vorzugsweise digitale visuelle Informationen, die durch eine Kamera oder einen optischen Sensor erfasst werden und zur Analyse und Erkennung des Haushaltsgerätes dienen. Die Verwendung einer gerätespezifischen Kennung beschreibt vorzugsweise die Nutzung von eindeutigen Identifikationsmerkmalen, wie QR-Codes, Barcodes, Seriennummern, Markierungen oder spezifischen visuellen Merkmalen des Geräts, um dieses präzise von anderen Objekten oder Geräten zu unterscheiden.

In einem weiteren Aspekt wird vorgeschlagen, dass das Identifizieren des mindestens einen Haushaltsgerätes ein Abgleichen der erfassten Bilddaten mit vorbestimmten Referenzbilddaten, die zu dem mindestens einen Haushaltsgerät als gerätespezifische Kennung verfügbar sind, und/oder ein Überprüfen, ob die intelligente Brille und das mindestens eine Haushaltsgerät über dieselbe Netzwerkverbindung verbunden sind, aufweist.

Das Abgleichen der erfassten Bilddaten mit vorbestimmten Referenzbilddaten bezeichnet vorzugsweise einen Prozess, bei dem die durch einen optischen Sensor oder eine Kamera aufgenommenen Bilddaten mit zuvor gespeicherten, standardisierten Referenzbilddaten verglichen werden. Dieser Abgleich erfolgt vorzugsweise durch Algorithmen, die Merkmale wie Formen, Farben, Texturen und/oder Muster analysieren, um Übereinstimmungen zu identifizieren und das Haushaltsgerät eindeutig zu erkennen. Der Nutzer trägt dabei beispielsweise die intelligente Brille, die über den optischen Sensor, beispielsweise eine Kamera, verfügt. Der optische Sensor kann dabei beispielsweise im Brillengestell integriert sein. Die intelligente Brille ist mit der Netzwerkverbindung verbunden. Für jedes Haushaltsgerät, mit dem eine Verbindung über (dieselbe) Netzwerkverbindung aufgebaut werden soll, existiert nun vorzugsweise ein markantes Referenzbild in einer Datenbank, die von einem Server- oder Cloudservice zur Verfügung gestellt wird. Über die Netzwerkverbindung werden nun die von dem optischen Sensor erfassten (Bild- oder Video)-Daten an den Server- oder Cloudservice übertragen. Alle Haushaltsgeräte des Haushalts sind ebenfalls mit der Netzwerkverbindung verbunden. Es erfolgt nun vorzugsweise über den Server- oder Cloudservice ein Abgleich, ob die erfassten Bild- oder Videodaten mit mindestens einem Referenzbild eines bestimmten Haushaltsgerätes übereinstimmen. Ferner wird überprüft, ob die intelligente Brille und das betreffende Haushaltsgerät mit der gleichen Netzwerkverbindung verbunden bzw. in dieser angemeldet sind. Sollte beides der Fall sein, ist ermittelt, um welchen Gerätetyp es sich handelt. Somit können das betreffende Haushaltsgerät und die intelligente Brille miteinander verknüpft werden. Hierbei ist es bevorzugt, dass in demselben Haushalt dasselbe Haushaltsgerät nicht mehrfach vorkommt.

In einem weiteren Aspekt wird vorgeschlagen, dass das mindestens eine Haushaltsgerät einen Time-of-Flight-Sensor zur Entfernungsmessung zwischen der intelligenten Brille und dem mindestens einen Haushaltsgerät aufweist, und wobei das Identifizieren des mindestens einen zu bedienenden Haushaltsgerätes ferner unter Verwendung der Entfernungsmessung erfolgt.

Falls mehrere gleiche oder identische Haushaltsgeräte in einem Haushalt vorhanden sind, kann es bevorzugt sein, wenn die Haushaltsgeräte mit einem Time-of-Flight-Sensor (TOF-Sensor) ausgestattet sind. Sollten somit mehrere optisch identische Haushaltsgeräte in derselben Netzwerkverbindung angemeldet sein, kann weiterhin eine geräteeindeutige Zuordnung ermöglicht werden. Dabei werden vorzugsweise dynamische Bildveränderungen in den erfassten Bild- oder Videodaten, die durch den optischen Sensor der intelligenten Brille erfasst werden, mit Abstandswerten des (jeweiligen) TOF-Sensors aller in Frage kommender Haushaltsgeräte abgleichen, um das dem Nutzer der intelligenten Brille (gerade) nächstgelegene Haushaltsgerät eindeutig zuzuordnen, um derart eine Bedienung dieses Haushaltsgerätes mittels der intelligenten Brille zu ermöglichen.

In einem weiteren Aspekt wird vorgeschlagen, dass das mindestens eine Haushaltsgerät eine gerätespezifische Codierung aufweist, die an einer sichtbaren Außenseite des mindestens einen Haushaltsgerätes vorgesehen ist, und wobei das Identifizieren des mindestens einen zu bedienenden Haushaltsgerätes ein Erkennen und Überprüfen der gerätespezifischen Codierung in den Bilddaten aufweist.

Falls mehrere gleiche oder identische Haushaltsgeräte in einem Haushalt vorhanden sind, kann zum eindeutigen Identifizieren eines betreffenden Haushaltsgerätes bevorzugt sein, an dem betreffenden Haushaltsgerät, beispielsweise in einem Gerätebildschirm, eine gerätespezifische Kodierung anzuzeigen. Die Kodierung wird vorzugsweise von dem optischen Sensor der intelligenten Brille erfasst. Anhand der gerätespezifischen Kodierung kann eindeutig ermittelt werden, welches Haushaltsgerät durch die intelligente Brille betrachtet wird.

In einem weiteren Aspekt wird vorgeschlagen, dass das Bedienen des mindestens einen Haushaltsgerätes ein Erzeugen eines Bediensignals und ein darauf basierendes Auslösen mindestens einer Gerätefunktion und/oder ein Ausgeben von mindestens einer Gerätestatusinformation aufweist.

Das Bedienen des mindestens einen Haushaltsgerätes bezeichnet vorzugsweise den Vorgang, bei dem ein Nutzer durch (virtuelle) Interaktionen wie Befehle, Gesten oder andere Eingaben die Steuerung oder Konfiguration eines Haushaltsgeräts vornimmt. Das Auslösen mindestens einer Gerätefunktion umfasst vorzugsweise die Aktivierung oder Deaktivierung spezifischer Funktionen oder Betriebsmodi des Haushaltsgeräts, wie beispielsweise das Einschalten einer Heizfunktion, das Starten eines Reinigungsprogramms oder die Anpassung der Temperatureinstellungen. Das Ausgeben von mindestens einer Gerätestatusinformation bezeichnet vorzugsweise die Bereitstellung von Informationen über den aktuellen Betriebszustand des Haushaltsgeräts, wie Energieverbrauch, Betriebsmodus, verbleibende Laufzeit und/oder Fehlermeldungen, welche dem Nutzer visuell in der intelligenten Brille oder über einen Gerätebildschirm oder akustisch angezeigt werden können.

In einem weiteren Aspekt wird vorgeschlagen, dass das Verfahren ferner ein Ermitteln mindestens einer Geste eines Nutzers zum Bedienen des mindestens einen Haushaltsgerätes in den erfassten Bilddaten, und ein Abgleich der mindestens einen Geste mit vorbestimmten Bediengesten zum Bedienen des mindestens einen Haushaltsgerätes über die Netzwerkverbindung aufweist.

Die Interaktionen des Nutzers, wie Handgesten zur Türöffnung oder Gesten zur Menünavigation, werden vorzugsweise von der intelligenten Brille erfasst. Die Gesten können z.B. von der intelligenten Brille, dem Haushaltsgerät und/oder einem (externen) Server- oder Cloudservice ausgewertet werden und durch Erzeugen eines oder mehrerer Bediensignale in Geräteaktionen umgewandelt werden. Verfügt die intelligente Brille zusätzlich über ein Mikrofon bzw. Audio-Stream-Upload, können auch Sprach- oder allgemeine Audiokommandos mit in der Auswertung berücksichtigt werden.

Dieser Aspekt kann an dem folgenden Ausführungsbeispiel erläutert werden. Dabei erfolgt ein Auslösen von Gerätefunktionen in Abhängigkeit von Körpergesten. Der Nutzer befindet sich vorzugsweise vor einem Haushaltsgerät und trägt dabei die intelligente Brille, die die Handgesten des Nutzers filmen kann. Es ist über eine Funkverbindung, z.B. WLAN, eine Kommunikation zwischen der intelligenten Brille und dem Haushaltsgerät hergestellt. Diese Verbindung kann direkte oder über einen zusätzlichen Server- oder Cloudservice erfolgen. Der Nutzer führt beispielsweise eine Handgeste wie eine "Wischbewegung" vor dem Haushaltsgerät aus. Eine solche Handgeste kann beispielsweise durch eine Handbewegung von rechts nach links, links nach rechts, unten nach oben, Öffnen oder schließen der Hand etc. erfolgen. Auch sind kombinierte Gesten, wie Zusammenführen von Daumen und Finger mit relativer Bewegung der Hand nach rechts oder links etc. möglich. Nach deren Erfassen durch den optischen Sensor der intelligenten Brille werden die verschiedenen "Hand-/Körpergesten" des Nutzers durch die intelligente Brille und/oder eine Recheneinrichtung in dem Server- oder Cloudservice und/oder von dem Haushaltsgerät erkannt und darauf basierend entsprechende Gerätereaktionen ausgelöst. Die Gesten sind dabei vorzugsweise jeweils einer Gerätefunktion zugeordnet, wie z.B. einer der folgenden Gerätefunktionen: schrittweise Navigation durch das Gerätemenü auf dem Gerätedisplay; "Sliden" durch das Gerätemenü (kombinierte Geste), Auslösen einer automatischen Tür-Öffnung; Auslösen eines Programmstarts; Auslösen eines Dampfstoßes z.B. beim Backofen mit Feuchtigkeitsunterstützung; Auslösen eines Kaffeebezugs; Quittieren von Meldungen/akustischen Meldungen.

In einem weiteren Aspekt wird vorgeschlagen, dass die intelligente Brille ferner ein Mikrofon aufweist, durch das Audiodaten, insbesondere ein Sprachkommando, des Nutzers und/oder einer Umgebung erfassbar sind, wobei das Bedienen des mindestens einen Haushaltsgerätes ferner unter Verwendung der Audiodaten erfolgt.

Neben Gesten kann der Nutzer auch Sprachkommandos einsetzen, die bestimmten Gerätefunktionen zugeordnet sind. Wird neben den weiteren erfassten Daten ein spezifisches Sprachkommando durch das Mikrofon erkannt, kann darauf basierend eine Auswahl einer betreffenden Gerätefunktion erfolgen. Die Sprachkommandos können von dem Gerätehersteller beispielsweise in einer Datenbank vorgespeichert sein und/oder durch den Nutzer individuell festlegbar sein.

Als Anwendungsbeispiel kann eine Ausgabe von Gerätestatusinformationen mittels eines Sprachkommandos des Nutzers erfolgen. Der Nutzer befindet sich beispielsweise vor dem Haushaltsgerät. Nun führt er ein Sprachkommando, wie "Geräteinformation" aus, das durch das Mikrofon der intelligenten Brille als Audiodaten erkannt wird. Die Audiodaten werden verarbeitet und gemeinsam mit den weiteren erfassten Daten zum Bedienen des Haushaltsgerätes verwendet. Dabei kann zum Bedienen eine akustische Ausgabe von Statusinformationen wie Restzeit, Garguttemperatur etc. erfolgen.

In einem weiteren Aspekt wird vorgeschlagen, dass unter Verwendung der Bilddaten und der Audiodaten ein Zuordnen zwischen einem Objekt, das mit dem Bedienen des mindestens einen Haushaltsgerätes in Verbindung steht, und dem mindestens einen Haushaltsgerät und darauf basierend, ein objektbezogenes Bedienen des mindestens einen Haushaltsgerätes erfolgt.

Das Objekt kann beispielsweise Teil des Haushaltsgerätes sein, wie eine Gerätetür oder sonstiges. Das Objekt kann aber auch für die Verarbeitung mit dem Haushaltsgerät vorgesehen sein, wie beispielsweise ein Wäschestück, ein Gargut, ein Blech, ein Topf, Kochutensilien, ein Nahrungsmittel etc.

Als Anwendungsbeispiel kann die Auswahl eines Automatik-(gar)-programms durch einen Blick mit der intelligenten Brille auf ein Objekt, insbesondere ein Gargut, vorzugsweise kombiniert mit einem Sprachkommando des Nutzers erfolgen. Der Nutzer befindet sich dabei vorzugsweise vor dem Haushaltsgerät und hält beispielsweise ein Backblech mit einem Gargut in einen Sichtbereich der intelligenten Brille und blickt ferner in Richtung des Haushaltsgerätes. Ferner führt der Nutzer ein Sprachkommando aus, das eine Erkennung des Gargutes auslöst und derart in Kombination mit den anderen erfassten Daten ein Automatikprogramm zum Garen des Gargutes mit dem Haushaltsgerät vorschlägt oder sogar automatisch auswählt.

In einem weiteren Aspekt wird vorgeschlagen, dass die intelligente Brille ferner einen Augen-Verfolgungssensor aufweist, wobei das Verfahren ferner ein Ermitteln eines Blickpunktes und/oder eines Fokusbereiches eines Nutzers durch den Augen-Verfolgungssensor aufweist, wobei das Bedienen des mindestens einen Haushaltsgerätes ferner unter Verwendung des Blickpunktes und/oder des Fokusbereiches erfolgt.

Ein Augen-Verfolgungssensor (engl.: Eye-Tracking-Sensor) bezeichnet vorzugsweise eine technische Komponente, die in der Lage ist, die Position und/oder Bewegung der Augen eines Nutzers präzise zu erfassen. Dies erfolgt vorzugsweise durch den Einsatz von optischen Verfahren wie der Erfassung von Reflexionen infraroter Strahlen auf der Augenoberfläche und/oder durch die Analyse von Videobildern, um die Blickrichtung, Augenbewegungen und/oder Fixierungspunkte zu bestimmen.

Das Ermitteln eines Blickpunktes und/oder eines Fokusbereiches eines Nutzers umfasst vorzugsweise ein Verfahren, bei dem die durch den Augen-Verfolgungssensor erfassten Daten analysiert werden, um den genauen Punkt und/oder Bereich zu identifizieren, auf den der Nutzer schaut. Dies kann sowohl die Erkennung eines spezifischen Objekts, beispielsweise eines Garguts, als auch eines räumlichen Bereichs umfassen, in dem die visuelle Aufmerksamkeit des Nutzers liegt. Der Nutzer trägt dabei beispielsweise die intelligente Brille, die auch als gemischte-Realität-Brille (Mixed Reality Brille) ausgebildet sein kann, und die über eine Kamera, ein Eyetracking-System und vorzugsweise auch über die Möglichkeit der exakten räumlichen Überblendung der realen Umgebung mit virtuellen Objekten und Informationen verfügt.

Durch die Einbeziehung des Blickpunktes und/oder des Fokusbereiches des Nutzers kann eine kontextbezogene und/oder nutzerbezogene und/oder objektbezogene Bedienung des Haushaltsgerätes ermöglicht werden, da beispielsweise eine Nutzerintention bezüglich der Bedienung des Haushaltsgerätes anhand einer Fokussierung eines bestimmten Objektes in Bezug auf das Haushaltsgerät und/oder eines bestimmten Bereiches an dem Haushaltsgerät, beispielsweise eine Tür und/oder eine Schaltfläche, durch den Augen-Verfolgungssensor ermittelbar ist. Die intelligente Brille kann ferner dazu eingerichtet sein, den ermittelten Blickpunkt und/oder Fokusbereich des Nutzers mit erfassten Gesten von Fingern des Nutzers und/oder Bewegungen einer Hand des Nutzers und/oder mit einem Sprachkommando zu kombinieren, und daraus eine Betriebsfunktion zum Bedienen des Haushaltsgerätes abzuleiten.

Als Anwendungsbeispiel kann ein Auslösen einer automatischen Türöffnung durch Verwendung einer erfassten Augenposition in Verbindung mit einer Geste und/oder einem Sprachkommando genannt werden. Dabei fokussiert der Nutzer beispielsweise eine Gerätetür des Haushaltsgeräts. Sobald das Objekt "Gerätetür" durch den optischen Sensor der intelligenten Brille erkannt ist, wird dem Benutzer im Bereich des erkannten Objekts die Meldung "Tür öffnen" in dem Sichtfeld der intelligenten Brille angezeigt. Anstatt einer virtuellen Überblendung kann auch im Bereich der Gerätetür ein Indikator, beispielsweise eine LED-Leuchte, am Haushaltsgerät vorgesehen sein. Durch eine Geste des Nutzers, beispielsweise ein Zusammenführen von Zeigefinger und Daumen, ein Tippen mit dem Daumen, und/oder durch ein Sprachkommando "Tür öffnen" wird beispielsweise eine automatische Türöffnung an dem Haushaltsgerät ausgelöst. Die intelligente Brille oder eine externalisierte Recheneinrichtung senden dabei vorzugsweise die dafür benötigten entsprechende Daten über die Netzwerkverbindung an das Haushaltsgerät. Dies kann direkt oder über eine Server- oder Cloudverbindung erfolgen.

In einem weiteren Aspekt wird vorgeschlagen, dass die intelligente Brille ferner einen Bildschirm zur Überblendung von Informationen aufweist, und wobei das Verfahren ferner ein Ausgeben einer gerätespezifischen und/oder betriebsspezifischen Information zu dem mindestens einen Haushaltsgerät an den Bildschirm aufweist, und wobei das Bedienen des mindestens einen Haushaltsgerätes ferner unter Verwendung der gerätespezifischen und/oder betriebsspezifischen Information erfolgt.

Ein Bildschirm zur (virtuellen) Überblendung bezeichnet vorzugsweise ein in die intelligente Brille integriertes Display oder optisches System, das Informationen im Sichtfeld des Nutzers einblendet. Dies kann durch transparente oder halbtransparente Projektionen auf die Brillengläser oder durch die Darstellung in einer virtuellen Umgebung erfolgen, sodass reale und digitale Inhalte simultan wahrgenommen werden können. Die Überblendung erfolgt dabei in Abhängigkeit von Kontext- oder Nutzereingaben.

Die gerätespezifischen und/oder betriebsspezifischen Informationen umfassen vorzugsweise digitale Daten, die sich auf ein bestimmtes Haushaltsgerät beziehen, wie dessen Modell, Typ oder technische Spezifikationen (gerätespezifisch), sowie Informationen zu dessen aktuellem Betriebszustand, wie Energieverbrauch, Temperatur, Betriebsmodus und/oder Fehlermeldungen (betriebsspezifisch). Diese Informationen werden vorzugsweise zielgerichtet aufbereitet und an den Bildschirm der intelligenten Brille übermittelt, um dem Nutzer relevante Daten im Zusammenhang mit dem Betrieb oder der Steuerung des Haushaltsgeräts bereitzustellen.

In einem weiteren Aspekt wird vorgeschlagen, dass das Ausgeben der gerätespezifischen und/oder betriebsspezifischen Information ein Ausgeben eines interaktiven Auswahlmenüs zu dem mindestens einen Haushaltsgerät aufweist, und wobei das Bedienen des mindestens einen Haushaltsgerätes ein Auswählen aus dem Auswahlmenü durch eine Geste und/oder eine Augenbewegung eines Nutzers, die von der intelligenten Brille erfassbar ist, aufweist.

Ein interaktives Auswahlmenü bezeichnet vorzugsweise eine grafische Benutzeroberfläche, die auf dem Bildschirm der intelligenten Brille oder auf dem Haushaltsgerät angezeigt wird und es einem Nutzer ermöglicht, durch aktive Interaktion mit den angezeigten Elementen, wie Schaltflächen, Symbolen oder Listen, eine Auswahl oder Eingabe vorzunehmen. Die Interaktion kann dabei grundsätzlich über verschiedene Eingabemethoden erfolgen, wie zum Beispiel durch Berührung (Touchscreen), Gestensteuerung, Sprachbefehle oder die Steuerung mittels Augenbewegungen, insbesondere bei einer intelligenten Brille. Das Menü ist vorzugsweise dynamisch und passt sich vorzugsweise an den Kontext oder die Nutzereingaben an, um relevante Optionen bereitzustellen.

Als Anwendungsbeispiel kann das Auslösen eines Programmstarts oder das Auswählen einer Funktion über den Gerätedisplay genannt werden. Der Nutzer fokussiert beispielsweise in einem Transparenz-Modus der intelligenten Brille, in dem keine Informationen auf dem Display der Brille angezeigt werden, eine Funktion im Auswahlmenü des Haushaltsgerätes, das beispielsweise an einem Gerätedisplay angezeigt wird. Sobald das Displayelement von dem optischen Sensor der intelligenten Brille erkannt ist, wird dem Nutzer beispielsweise im Bereich des erkannten Objekts über den Bildschirm der intelligenten Brille eine virtuelle Selektionsschaltfläche angezeigt. Durch Gesten, wie ein Zusammenführen von Zeigefinger und Daumen, ein Tippen mit dem Daumen und/oder durch ein Sprachkommando (z.B. "Selektieren") wird die Funktion dann vorzugsweise mittels der intelligenten Brille ausgelöst ein entsprechendes Signal über die Netzwerkverbindung an das Haushaltsgerät gesendet. Dies kann direkt von der intelligenten Brille an das Haushaltsgerät oder indirekt über eine Server- oder Cloudverbindung erfolgen.

Als weiteres Anwendungsbeispiel kann die Bedienung eines Haushaltsgerätes ohne eigenen Bildschirm, wie z.B. einer Dunstabzugshaube, genannt werden. Der Nutzer fokussiert das Haushaltsgerät. Sobald das Haushaltsgerät eindeutig erkannt ist, wird dem Nutzer eine virtuelle Bedienoberfläche, insbesondere mit virtuellen Schaltflächen oder Slidern, angezeigt. Eine Auswahl auf der virtuellen Bedienoberfläche kann der Nutzer virtuell über Eyetracking oder eine gestengesteuerte oder Sprachkommando-basierte Selektion durchführen. Durch die Selektion und/oder Anpassung eines Wertes der virtuellen Bedienoberfläche erfolgt dann die Bedienung des Haushaltsgerätes. Das dazu erforderliche Bedien-Signal kann dabei direkt von der intelligenten Brille an das Haushaltsgerät oder indirekt über eine Server- oder Cloudverbindung bereitgestellt werden.

In einem weiteren Aspekt wird vorgeschlagen, dass die mindestens eine Netzwerkverbindung eine WLAN-Verbindung und/oder eine Cloudservice-Verbindung und/oder eine Funk-Verbindung und/oder eine Bluetooth-Verbindung und/oder eine Ultra-Breitband-Verbindung und/oder eine Nahr-Radio-Frequenz-Verbindung aufweist.

Eine WLAN-Verbindung bezeichnet vorzugsweise eine drahtlose Netzwerkverbindung, die über das IEEE-802.11-Protokoll arbeitet und einen schnellen und zuverlässigen Datenaustausch zwischen Geräten innerhalb eines lokalen Netzwerks oder mit dem Internet ermöglicht.

Eine Cloudservice-Verbindung umfasst vorzugsweise die Anbindung an externe Server oder Dienste, die in einer Cloud-Infrastruktur betrieben werden, um Daten zu speichern, zu verarbeiten oder Anwendungen auszuführen. In der Cloudservice-Verbindung kann auch die Verarbeitung und Auswertung der von der intelligenten Brille erfassten Daten sowie die Bereitstellung eines Bediensignals erfolgen.

Eine Funk-Verbindung bezeichnet vorzugsweise eine drahtlose Kommunikationsschnittstelle, die elektromagnetische Wellen in einem festgelegten Frequenzbereich nutzt, wie beispielsweise für Mobilfunk oder drahtlose Steuerungen.

Eine Bluetooth-Verbindung ist vorzugsweise eine drahtlose Kurzstreckenkommunikationstechnologie, die auf dem Bluetooth-Standard basiert und den energieeffizienten Datenaustausch zwischen Geräten über kurze Distanzen ermöglicht.

Eine Ultra-Breitband-Verbindung (UWB) bezeichnet vorzugsweise eine drahtlose Technologie, die mit sehr kurzen und schnellen Impulsen über ein breites Frequenzspektrum arbeitet und präzise Ortung sowie schnelle Datenübertragung ermöglicht.

Eine Nah-Radio-Frequenz-Verbindung (Near-Field Communication, NFC) umfasst vorzugsweise eine drahtlose Technologie für die Kommunikation zwischen Geräten über sehr kurze Distanzen, die für den schnellen Datenaustausch bevorzugt wird.

Ein Ausführungsbeispiel der Erfindung ist in den Zeichnungen rein schematisch dargestellt und wird nachfolgend näher beschrieben. Es zeigt
- Figur 1: eine beispielhafte Ausführungsform eines vorliegenden Systems;
- Figur 2: eine beispielhafte Ausführungsform eines vorliegenden Systems; und
- Figur 3: ein schematisches Flussdiagramm einer Ausführungsform des vorliegenden Verfahrens.

Im Folgenden werden, sofern nicht anders angegeben, für gleiche und gleichwirkende Merkmale gleiche Bezugszeichen verwendet.

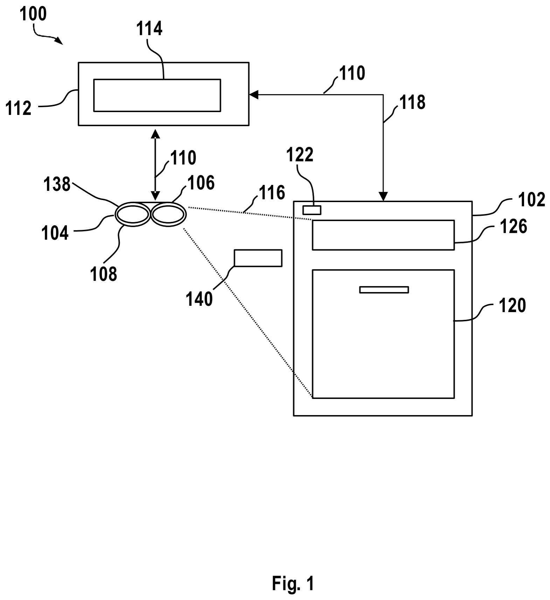

Figur 1 zeigt eine Ausführungsform eines Systems 100 zum Bedienen eines Haushaltsgerätes 102. Das mindestens eine Haushaltsgerät 102 ist im gezeigten Fall ein Backofen, der als Einbau-Haushaltsgerät 102 in einer Küchen-Umgebung verbaut sein kann. In anderen Fällen kann das Haushaltsgerät 102 eine Spülmaschine und/oder einen Wäschetrockner und/oder eine Mikrowelle und/oder einen Kaffeeautomaten und/oder einen Staubsauger und/oder eine Dunstabzugshaube und/oder einen Nasssauger und/oder einen Dampfgarer und/oder einen Geschirrwärmer und/oder einen Kühlschrank und/oder einen Gefrierschrank aufweisen.

Das System 100 weist neben dem mindestens eine Haushaltsgerät 102 mindestens eine intelligente Brille 104 auf. Die mindestens eine intelligente Brille 104 weist mindestens einen optischen Sensor 106 auf. Der optische Sensor 106 ist beispielsweise eine Kamera, die in ein Brillengestell 108 der intelligenten Brille 104 eingelassen sein kann.

Die intelligente Brille 104 ist mit einer Netzwerkverbindung 110 verbunden. Die Netzwerkverbindung 110 ist vorliegend als eine WLAN-Verbindung mit einem Cloudservice 112 hergestellt. Die Netzwerkverbindung 110 ermöglicht mindestens das Übersenden von Daten von der intelligenten Brille 104 an den Cloudservice 112 zur dortigen Weiterverarbeitung. Ebenfalls kann auch ein bidirektionaler Datenaustausch durch die Netzwerkverbindung 110 ermöglicht werden.

Das mindestens eine Haushaltsgerät 102 ist ebenfalls mit der Netzwerkverbindung 110 verbunden. Die Netzwerkverbindung 110 ermöglicht mindestens das Übersenden von Daten von dem Cloudservice 112 zur dortigen Weiterverarbeitung. Ebenfalls kann auch ein bidirektionaler Datenaustausch durch die Netzwerkverbindung 110 ermöglicht werden.

Das System 100 weist mindestens eine Recheneinrichtung 114 auf, die vorliegend beispielsweise von dem Cloudservice 112 bereitgestellt ist. Die Recheneinrichtung 114 ist somit mit der Netzwerkverbindung 110 verbunden. Die Recheneinrichtung 114 kann in anderen Fällen auch in dem Haushaltsgerät 102 oder in der intelligenten Brille 104 umfasst sein.

Der optische Sensor 106 der intelligenten Brille 104 ist vorliegend dazu eingerichtet, Bilddaten von dem mindestens einen Haushaltsgerät 102 innerhalb eines Sichtfeldes 116 des optischen Sensors 106 zu erfassen. Die Bilddaten werden vorliegend über die Netzwerkverbindung 110 an die Recheneinrichtung 114 kommuniziert, um dort verarbeitet und analysiert zu werden. Die Recheneinrichtung 114 ist dabei dazu eingerichtet, die mindestens die Bilddaten zu verarbeiten, um darauf basierend ein Bediensignal 118 zum Bedienen des mindestens einen Haushaltsgerätes 102 zu erzeugen. Das Bediensignal 118 wird über die Netzwerkverbindung 110 an das Haushaltsgerät 102 kommuniziert, und dort eine Bedienfunktion, beispielsweise in ein Starten eines Garprogramms, oder in ein Öffnen einer Gerätetür 120, übersetzt. Basierend auf dem erzeugten Bediensignal kann mindestens eine Gerätefunktion ausgelöst und/oder mindestens eine Gerätestatusinformation ausgegeben werden.

Um sicherzustellen, dass das vom Nutzer gewünschte Haushaltsgerät 102 bedient wird, wird vor dem Erzeugen des Bediensignals 118 bzw. vor dem Bedienen des Haushaltsgerätes 102 das von dem Nutzer durch die intelligente Brille 104 betrachtete Haushaltsgerät 102 eindeutig identifiziert. Das Identifizieren kann beispielsweise direkt durch die intelligente Brille 104 und/oder in der Recheneinrichtung 114 erfolgen. Das Identifizieren erfolgt dabei vorzugsweise unter Verwendung der erfassten Bilddaten sowie einer gerätespezifischen Kennung des Haushaltsgerätes 102.

Die Identifizierung kann dabei auf unterschiedliche Arten erfolgen. Einerseits kann das Identifizieren des mindestens einen Haushaltsgerätes 102 durch ein Abgleichen der erfassten Bilddaten mit vorbestimmten Referenzbilddaten, die zu dem mindestens einen Haushaltsgerät 102 als die gerätespezifische Kennung verfügbar sind erfolgen. Ferner kann vorzugsweise geprüft werden, ob die intelligente Brille 104 und das mindestens eine Haushaltsgerät 102 über dieselbe Netzwerkverbindung 110 verbunden sind. Nur wenn die intelligente Brille 104 und das mindestens eine Haushaltsgerät 102 in derselben Netzwerkverbindung 110 sind, ist überhaupt eine Bedienung des Haushaltsgerätes 102 unter Verwendung der durch die intelligente Brille 104 erfassten Bilddaten sinnvoll.

Das mindestens eine Haushaltsgerät 102 kann zur Identifizierung auch einen Time-of-Flight-Sensor 122 zur Entfernungsmessung zwischen der intelligenten Brille 104 und dem mindestens einen Haushaltsgerät 102 aufweisen (siehe Figur 1). In diesem Fall kann das Identifizieren des mindestens einen zu bedienenden Haushaltsgerätes 102 ferner unter Verwendung der Entfernungsmessung des Time-of-Flight-Sensors 122 durchgeführt werden.

Ferner kann das mindestens eine Haushaltsgerät 102 eine gerätespezifische Codierung 124 aufweisen, die an einer sichtbaren Außenseite des mindestens einen Haushaltsgerätes 102, beispielsweise in einem Gerätebildschirm 126 vorgesehen ist. Das Identifizieren des mindestens einen zu bedienenden Haushaltsgerätes 102 kann dann auch über ein Erkennen und Überprüfen der gerätespezifischen Codierung 124 in den Bilddaten, die von dem optischen Sensor 106 erfasst werden, erfolgen.

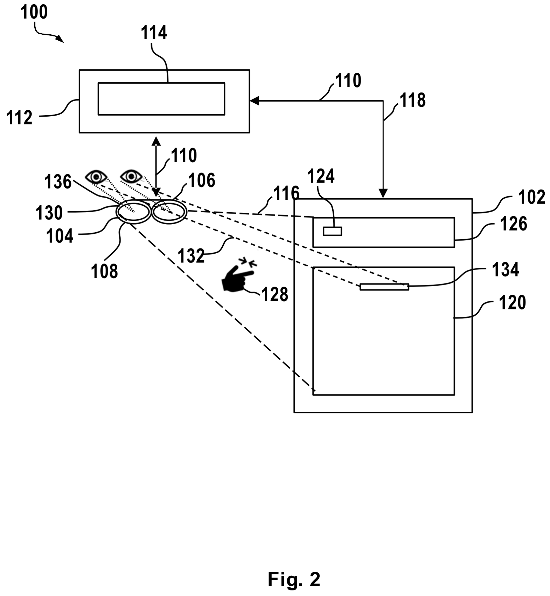

Die Recheneinrichtung 114 kann ferner dazu eingerichtet sein, mindestens eine Geste 128 eines Nutzers zum Bedienen des mindestens einen Haushaltsgerätes 102 in den erfassten Bilddaten zu erkennen, und die mindestens eine Geste 128 mit vorbestimmten Bediengesten zum Bedienen des mindestens einen Haushaltsgerätes 102 abzugleichen (siehe Figur 2). Das Bediensignal 118 wird dann ferner unter Verwendung bzw. Einbeziehung oder auch basierend auf der Geste 128 erzeugt. Die mindestens eine Geste 128 wird innerhalb des Sichtfeldes 116 erfasst.

Die intelligente Brille 104 weist gemäß Figur 2 ferner einen Augen-Verfolgungssensor 130 auf. Der Augen-Verfolgungssensor 130 ist dazu eingerichtet, einen Blickpunkt und/oder einen Fokusbereich 132 des Nutzers zu ermitteln. Im Falle der Figur 2 fokussiert der Nutzer beispielsweise einen Türgriff 134 der Gerätetür 120. Die Recheneinrichtung 114 ist ferner dazu ausgebildet, das Bediensignal 118 zum Bedienen des mindestens einen Haushaltsgerätes 102 ferner unter Verwendung der Blickpunktes und/oder des Fokusbereiches 132 zu erzeugen, in diesem Fall beispielsweise, indem durch die Fokussierung des Nutzers auf den Türgriff 134 auf eine Intension des Nutzers zum Öffnen der Gerätetür 120 geschlossen wird.

Die intelligente Brille 104 kann ferner einen Bildschirm 136 zur Überblendung von Informationen aufweisen, wie dies in Figur 2 schematisch angedeutet ist. Insbesondere in Abhängigkeit der Bilddaten kann eine gerätespezifische und/oder betriebsspezifische Information zu dem mindestens einen Haushaltsgerät 102 an den Bildschirm 136 ausgegeben werden. Das Bedienen des mindestens einen Haushaltsgerätes 102 bzw. das Erzeugen des mindestens einen Bediensignals 118 kann ferner unter Verwendung der gerätespezifischen und/oder betriebsspezifischen Information erfolgen. Dabei kann beispielsweise als die gerätespezifische und/oder betriebsspezifische Information ein interaktives Auswahlmenü zu dem mindestens einen Haushaltsgerät 102 ausgegeben bzw. angezeigt werden, aus dem der Nutzer beispielsweise durch die Geste 128 und/oder eine Augenbewegung eine Auswahl treffen kann, die von der intelligenten Brille 104 erfassbar ist, so dass darauf basierend das Bediensignal 118 erzeugbar ist.

Im Falle von Fig. 1 weist die intelligente Brille 104 ferner ein Mikrofon 138 auf, durch das Audiodaten des Nutzers und/oder einer Umgebung erfassbar sind, wobei das Bedienen des mindestens einen Haushaltsgerätes 102 ferner unter Verwendung der Audiodaten erfolgt. Unter Verwendung der Bilddaten und der Audiodaten kann auch ein Zuordnen zwischen einem Objekt 140, beispielsweise einem Blech, das mit dem Bedienen des mindestens einen Haushaltsgerätes 102 in Verbindung steht, und dem mindestens einen Haushaltsgerät 102 erfolgen. Darauf basierend kann dann ein objektbezogenes Bedienen des mindestens einen Haushaltsgerätes 102 erfolgt.

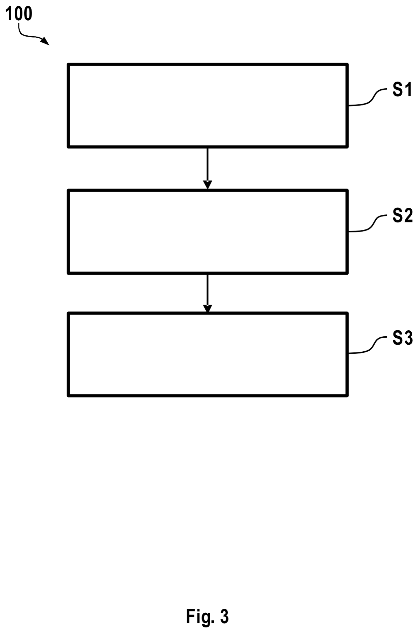

Figur 3 zeigt ein schematisches Flussdiagramm eines vorliegenden Verfahrens S zum Bedienen eines Haushaltsgerätes 102.

**In** einem Schritt S1 umfasst das Verfahren S ein Bereitstellen der den optischen Sensor 106 aufweisenden, intelligenten Brille 104 und des mindestens einen Haushaltsgerätes 102, wobei die intelligente Brille 104 und das mindestens eine Haushaltsgerät 102 über die Netzwerkverbindung 110 verbindbar sind.

**In** einem Schritt S2 umfasst das Verfahren S ein Erfassen von Bilddaten von dem mindestens einen Haushaltsgerät 102 durch den optischen Sensor 106 der intelligenten Brille 104.

**In** einem Schritt S3 umfasst das Verfahren S ein Bedienen des mindestens einen Haushaltsgerätes 102 über die Netzwerkverbindung 110 unter Verwendung der erfassten Bilddaten.

### Bezugszeichenliste

- 100: System
- 102: Haushaltsgerät
- 104: intelligente Brille
- 106: optischer Sensor
- 108: Brillengestell
- 110: Netzwerkverbindung
- 112: Cloudservice
- 114: Recheneinrichtung
- 116: Sichtfeld
- 118: Bediensignal
- 120: Gerätetür
- 122: Time-of-Flight-Sensor
- 124: Codierung
- 126: Gerätebildschirm
- 130: Augen-Verfolgungssensor
- 132: Fokusbereich
- 134: Türgriff
- 136: Bildschirm
- 138: Mikrofon
- 140: Objekt

- S: Verfahren
- S1: Verfahrensschritt "Bereitstellen"
- S2: Verfahrensschritt "Erfassen"
- S3: Verfahrensschritt "Bedienen"

## Patentansprüche

1. Verfahren (S) zum Bedienen eines Haushaltsgerätes (102), das Verfahren (S) umfassend die Schritte:
- Bereitstellen (S1) einer einen optischen Sensor (106) aufweisenden, intelligenten Brille (104) und mindestens eines Haushaltsgerätes (102), wobei die intelligente Brille (104) und das mindestens eine Haushaltsgerät (102) über eine Netzwerkverbindung (110) verbindbar sind;
- Erfassen (S2) von Bilddaten von dem mindestens einen Haushaltsgerät (102) durch den optischen Sensor (106) der intelligenten Brille (104); und
- Bedienen (S3) des mindestens einen Haushaltsgerätes (102) über die Netzwerkverbindung (110) unter Verwendung der erfassten Bilddaten.

2. Verfahren nach Anspruch 1, ferner aufweisend ein, insbesondere eindeutiges, Identifizieren des mindestens einen zu bedienenden Haushaltsgerätes (102) in den Bilddaten unter Verwendung einer gerätespezifischen Kennung.

3. Verfahren nach Anspruch 2, wobei das Identifizieren des mindestens einen Haushaltsgerätes (102) ein Abgleichen der erfassten Bilddaten mit vorbestimmten Referenzbilddaten, die zu dem mindestens einen Haushaltsgerät (102) als gerätespezifische Kennung verfügbar sind, und/oder ein Überprüfen, ob die intelligente Brille (104) und das mindestens eine Haushaltsgerät (102) über dieselbe Netzwerkverbindung (110) verbunden sind, aufweist.

4. Verfahren nach Anspruch 3, wobei das mindestens eine Haushaltsgerät einen Time-of-Flight-Sensor (122) zur Entfernungsmessung zwischen der intelligenten Brille (104) und dem mindestens einen Haushaltsgerät (102) aufweist, und wobei das Identifizieren des mindestens einen zu bedienenden Haushaltsgerätes (102) ferner unter Verwendung der Entfernungsmessung erfolgt.

5. Verfahren nach einem der Ansprüche 2 bis 4, wobei das mindestens eine Haushaltsgerät (102) eine gerätespezifische Codierung (124) aufweist, die an einer sichtbaren Außenseite des mindestens einen Haushaltsgerätes (102) vorgesehen ist, und wobei das Identifizieren des mindestens einen zu bedienenden Haushaltsgerätes (102) ein Erkennen und Überprüfen der gerätespezifischen Codierung (124) in den Bilddaten aufweist.

6. Verfahren nach einem der vorstehenden Ansprüche, wobei das Bedienen des mindestens einen Haushaltsgerätes (102) ein Erzeugen eines Bediensignals (118) und ein darauf basierendes Auslösen mindestens einer Gerätefunktion und/oder ein Ausgeben von mindestens einer Gerätestatusinformation aufweist.

7. Verfahren nach einem der vorstehenden Ansprüche, ferner aufweisend ein Ermitteln mindestens einer Geste (128) eines Nutzers zum Bedienen des mindestens einen Haushaltsgerätes (102) in den erfassten Bilddaten, und ein Abgleich der mindestens einen Geste (128) mit vorbestimmten Bediengesten zum Bedienen des mindestens einen Haushaltsgerätes (102) über die Netzwerkverbindung (110).

8. Verfahren nach einem der vorstehenden Ansprüche, wobei die intelligente Brille (104) ferner ein Mikrofon (138) aufweist, durch das Audiodaten des Nutzers und/oder einer Umgebung erfassbar sind, wobei das Bedienen des mindestens einen Haushaltsgerätes (102) ferner unter Verwendung der Audiodaten erfolgt.

9. Verfahren nach Anspruch 8, wobei unter Verwendung der Bilddaten und der Audiodaten ein Zuordnen zwischen einem Objekt (140), das mit dem Bedienen des mindestens einen Haushaltsgerätes (102) in Verbindung steht, und dem mindestens einen Haushaltsgerät (102) und darauf basierend, ein objektbezogenes Bedienen des mindestens einen Haushaltsgerätes (102) erfolgt.

10. Verfahren nach einem der vorstehenden Ansprüche, wobei die intelligente Brille (104) ferner einen Augen-Verfolgungssensor (130) aufweist, wobei das Verfahren (S) ferner ein Ermitteln eines Blickpunktes und/oder eines Fokusbereiches (132) eines Nutzers durch den Augen-Verfolgungssensor (130) aufweist, wobei das Bedienen des mindestens einen Haushaltsgerätes (102) ferner unter Verwendung des Blickpunktes und/oder des Fokusbereiches (132) erfolgt.

11. Verfahren nach einem der vorstehenden Ansprüche, wobei die intelligente Brille (104) ferner einen Bildschirm (136) zur Überblendung von Informationen aufweist, und wobei das Verfahren (S) ferner ein Ausgeben einer gerätespezifischen und/oder betriebsspezifischen Information zu dem mindestens einen Haushaltsgerät (102) an den Bildschirm (136) aufweist, und wobei das Bedienen des mindestens einen Haushaltsgerätes (102) ferner unter Verwendung der gerätespezifischen und/oder betriebsspezifischen Information erfolgt.

12. Verfahren nach Anspruch 11, wobei das Ausgeben der gerätespezifischen und/oder betriebsspezifischen Information ein Ausgeben eines interaktiven Auswahlmenüs zu dem mindestens einen Haushaltsgerät (102) aufweist, und wobei das Bedienen des mindestens einen Haushaltsgerätes (102) ein Auswählen aus dem Auswahlmenü durch eine Geste (128) und/oder eine Augenbewegung eines Nutzers, die von der intelligenten Brille (104) erfassbar ist, aufweist.

13. Verfahren nach einem der vorstehenden Ansprüche, wobei die mindestens eine Netzwerkverbindung (110) eine WLAN-Verbindung und/oder eine Cloudservice-Verbindung (112) und/oder eine Funk-Verbindung und/oder eine Bluetooth-Verbindung und/oder eine Ultra-Breitband-Verbindung und/oder eine Nahr-Radio-Frequenz-Verbindung aufweist.

14. Verwendung einer intelligenten Brille (104) in einem Verfahren (S) nach einem der vorstehenden Ansprüche.

15. System (100) zum Bedienen eines Haushaltsgerätes (102), aufweisend eine einen optischen Sensor (106) aufweisende, intelligente Brille (104), mindestens ein Haushaltsgerät (102) und mindestens eine Recheneinrichtung (114), wobei die intelligente Brille (104), das mindestens eine Haushaltsgerät (102) und die Recheneinrichtung (114) über eine Netzwerkverbindung (110) verbindbar sind; wobei der optische Sensor (106) der intelligenten Brille (104) zum Erfassen von Bilddaten von dem mindestens einen Haushaltsgerät (102) ausgebildet ist, und wobei die Recheneinrichtung (114) unter Verwendung der erfassten Bilddaten zum Erzeugen eines Bediensignals (118) zum Bedienen des mindestens einen Haushaltsgerätes (102) ausgebildet ist.
